# EUROPÄISCHE PATENTSCHRIFT

(11) **EP 3 781 986 B1**
(45) Veröffentlichungstag und Bekanntmachung des Hinweises auf die Patenterteilung: **21.06.2023**
(21) Anmeldenummer: 19719214.9
(22) Anmeldetag: 15.04.2019
(51) Int. Cl.: G02F 1/35

(54) **VERFAHREN SOWIE VORRICHTUNG ZUR FREQUENZKONVERSION UND VERSTÄRKUNG VON LASERSTRAHLUNG MITTELS NICHTLINEARER MEDIEN IN OPTISCHEN RESONATOREN**
METHOD AND APPARATUS FOR FREQUENCY CONVERSION AND AMPLIFICATION OF LASER RADIATION BY MEANS OF NONLINEAR MEDIA IN OPTICAL RESONATORS
PROCÉDÉ ET DISPOSITIF DE CONVERSION DE FRÉQUENCE ET D'AMPLIFICATION DE RAYONNEMENT LASER AU MOYEN DE MILIEUX NON LINÉAIRES DANS DES RÉSONATEURS OPTIQUES

(30) Priorität: 16.04.2018 DE 102018108953
(43) Veröffentlichungstag der Anmeldung: 24.02.2021
(73) Patentinhaber: Universität Hamburg, 20146 Hamburg (DE)
(72) Erfinder: SCHNABEL, Roman, 30161 Hannover (DE); SCHÖNBECK, Axel, 25421 Pinneberg (DE); STEINLECHNER, Sebastian, 52070 Aachen (DE)
(74) Vertreter: Hauck Patentanwaltspartnerschaft mbB
(86) Internationale Anmeldenummer: PCT/EP2019/059677
(87) Internationale Veröffentlichungsnummer: WO 2019/201857

(56) Entgegenhaltungen:
- EP-A1- 3 299 884
- DE-A1-102008 025 588
- DE-B3-102014 017 931
- US-A1- 2010 165 453
- US-A1- 2011 243 161
- US-A1- 2017 307 956

## Beschreibung

Die Erfindung betrifft ein Verfahren sowie eine Vorrichtung zur Erzeugung von Laserstrahlung mittels eines temperaturkontrollierten optischen Aufbaus. Insbesondere dienen diese der Frequenzkonversion und Verstärkung von Laserstrahlung mittels nichtlinearer Medien in optischen Resonatoren.

Optische Resonatoren, die nichtlineare Medien enthalten, erzeugen aus einer oder mehreren in den Resonator eingestrahlten Pumpwellen Strahlung einer oder mehrerer neuer Wellenlängen. Durch diese Konversion kann Laserstrahlung erzeugt werden, deren Wellenlänge von der Wellenlänge der eingestreuten Pumpwelle abweicht und insbesondere außerhalb der Wellenlängen verfügbarer, aktiver Lasermedien liegt. Auch kann die Leistung eines eingestrahlten Signalstrahls durch einen Pumpstrahl anderer Wellenlänge verstärkt werden. In beiden Fällen handelt sich hierbei um einen optisch nichtlinearen Prozess. Ein entsprechender Aufbau besteht üblicherweise aus einem optisch nichtlinearen Festkörpermedium, insbesondere einem Kristall, in einem optischen Resonator. Die eingestrahlte Pumpstrahlung und bei Bedarf die Signalstrahlung werden dabei in das Festkörpermedium fokussiert. Das nichtlineare Festkörpermedium muss zwischen allen eingestrahlten und allen neu erzeugten Wellenlängen die Phasenanpassung (engl.: phase matching) gewährleisten. Ansonsten ist die Effizienz von Konversionsprozess bzw. Verstärkungsprozess gering. Durch die optische Resonanz einzelner bzw. besser aller beteiligten Wellenlängen wird die Effizienz der Prozesse weiter erhöht bzw. erreicht überhaupt erst nutzbare Werte. Die Phasenanpassung wird üblicherweise durch Einstellen der (materialabhängigen) Phasenanpassungstemperatur des Festkörpermediums erreicht. Bei der Phasenanpassungstemperatur kommt es zu konstruktiver Interferenz des gewünschten nichtlinearen Prozesses bezüglich der Teilwellen, die an unterschiedlichen Orten im Festkörpermedium entlang der Propagation des Lichts erzeugt werden. Bei dieser Temperatur sind die Brechzahlen des Kristalls für alle beteiligten Wellenlängen nahezu gleich (jedoch nicht identisch, da noch die aus der Fokussierung resultierende Gouy-Phase ausgeglichen werden muss).

Der Resonator kann beispielsweise durch zwei Spiegel erzeugt werden, zwischen denen das nichtlineare Festkörpermedium angeordnet wird, wobei die Spiegel die einlaufenden Wellenfronten exakt in sich zurückreflektieren, so dass das Licht im Resonator im Prinzip unendlich oft umlaufen kann. Damit ein optischer Resonator für eine bestimmte Wellenlänge resonant ist, muss seine optische Umlauflänge ein Vielfaches der Wellenlänge betragen. Eine sehr stabile und insbesondere rauscharme Methode sieht die Einstellung der optischen Länge des Resonators über seine Temperatur vor. Hierbei wird der thermische Ausdehnungskoeffizient und/oder die Temperaturabhängigkeit der Brechzahl des durchstrahlten Festkörpermediums genutzt. Problematisch ist dabei, dass in der Regel (unter anderem durch die notwendige Fokussierung und dem daraus resultierenden Unterschied der Gouy-Phasen) jede Wellenlänge eine andere Temperatur benötigt, um ihre jeweilige optische Resonanz zu realisieren. Diese unterscheiden sich zudem auch von der Phasenanpassungstemperatur. Aus diesem Grund wird bei optischen Resonatoren mit nichtlinearen Festkörpermedien (im Folgenden als nichtlineare Resonatoren bezeichnet) zumeist die Phasenanpassung über die Temperatur und die Resonanz durch eine Längenänderung des Resonators über einen Piezo-Aktor realisiert. Dieses Verfahren hat jedoch mehrere Nachteile. Zum einen lässt sich über einen Piezo-Aktor der Resonator nur für *eine* Wellenlänge resonant einstellen. Zum anderen wird der Piezo-Aktor in der Regel mit Hochspannung betrieben, was Schutzmaßnahmen erfordert und auch - aufgrund der üblicherweise stark rauschenden Hochspannung - zu einem Rauschen der durch den Piezo-Aktor eingestellten Resonatorlänge führt.

In der Veröffentlichung Zielinska et al., "Fully-resonant, tunable, monolithic frequency conversion as a coherent UVA source", Opt. Express 25, 1142-1150 (2017) wird ein partitionierter Festkörperresonator beschrieben. Der Resonator ist monolithisch, d.h. er wird durch an gegenüberliegenden Enden des Festkörpermediums aufgebrachte Spiegelflächen gebildet. Der Resonator verfügt über drei entlang des Laserstrahls hintereinander angeordnete Partitionen, wobei nur eine mittlere Partition nichtlinear agiert, also aktiv ist. Dieser aktive, mittlere Bereich wird bei der Phasenanpassungstemperatur betrieben. Die auf gegenüberliegenden Seiten des mittleren Bereichs angeordneten, nicht aktiven Partitionen können unabhängig voneinander temperiert werden, wobei hierüber die Resonanzbedingung für das rote Pumplicht eingestellt werden soll. Hierdurch soll eine unabhängige Steuerung der Phasenanpassung und der Resonatorlänge erreicht werden. Zur Aufrechterhaltung einer ausreichenden Effizienz muss nach Zielinska die Temperatur über den gesamten aktiven Bereich konstant bei der Phasenanpassungstemperatur gehalten werden, was sich aufgrund der angrenzenden Partitionen anderer Temperatur als schwierig gestaltet. Zielinska sieht es daher als notwendig an, die Temperaturen der nicht aktiven Partitionen von der in der aktiven Partition eingestellten Temperatur nur geringfügig abweichen zu lassen. Dies hat jedoch zur Folge, dass zum Erreichen der Resonanzbedingung für das rote Pumplicht zusätzlich über ein piezoelektrisches Element Druck auf das Festkörpermedium ausgeübt werden muss.

US 5 898 718 A beschreibt ein nichtlineares Festkörpermedium innerhalb dessen unterschiedliche Temperaturen eingestellt werden können, um die Ausgangsintensität unterschiedlicher harmonischer Frequenzen zu optimieren. Ein Resonator wird hierbei nicht verwendet.

Aus US 2011/0243161 ist ein Lasersystem mit einem nichtlinearen Kristallbereich bekannt, der einen ersten Längsabschnitt und einen zweiten Längsabschnitt besitzt. Der nichtlineare Kristall ist ausgebildet, um einfallendes Licht eines Lasers in frequenzkonvertiertes Licht umzuwandeln, wobei der nichtlineare Kristall in einem ersten Abschnitt ein Phase-Matching für das einfallende Licht und das frequenzkonvertierte Licht herbeiführt und der zweite Längsabschnitt des nichtlinearen Kristalls ein Phasen-Mismatching zwischen einfallendem Licht und konvertiertem Licht herbeiführt, das Phasen-Mismatching dient dazu, die Intensität des konvertierten Lichts an einer Austrittsfläche zu reduzieren.

DE 10 204 017 931 B3 betrifft eine Vorrichtung und ein Verfahren zur Erzeugung elektromagnetischer Strahlung mit einem Pumplaser. Ein optisch parametrischer Oszillator mit einem nichtlinearen optischen Kristall ist vorgesehen, wobei durch Anlegen eines Temperaturgradienten bei einer vorbestimmten Temperatur des Kristalls die erzeugte Strahlung ohne Justieraufwand automatisch über einen breiten Wellenlängenbereich abstimmbar ist.

Der Erfindung liegt die Aufgabe zugrunde, einen nichtlinearen Resonator sowie ein Verfahren zu dessen Betrieb zur Verfügung zu stellen, die bei einer einfachen und kompakten Realisierung des Resonators einen effizienten Betrieb erlauben.

Die Erfindung löst die Aufgabe durch ein Verfahren nach Anspruch 1 sowie durch eine Vorrichtung nach Anspruch 10. Vorteilhafte Ausgestaltungen sind Gegenstand der Unteransprüche, der Beschreibung sowie der Figuren.

Das erfindungsgemäße Verfahren zur Erzeugung von Laserstrahlung mittels eines temperaturkontrollierten optischen Aufbaus umfassend ein in einem Resonator angeordnetes, optisch nichtlineares Festkörpermedium mit einem aktiven Bereich, wobei in das Festkörpermedium eingebrachte Pumpstrahlung, unterstützt durch konstruktive Interferenz, ausgehende Laserstrahlung erzeugt, ist gekennzeichnet durch Anpassen der Resonatorlänge durch Einstellen einer ersten Temperatur innerhalb eines ersten Abschnitts des aktiven Bereichs und Anpassen der Phasen der erzeugten und an der Erzeugung der Laserstrahlung beteiligten Wellenlängen durch Einstellen einer zweiten Temperatur innerhalb eines zweiten Abschnitts des aktiven Bereichs.

Die erfindungsgemäße Vorrichtung zur Erzeugung von Laserstrahlung umfasst einen temperaturkontrollierten optischen Aufbau mit einem in einem Resonator angeordneten, optisch nichtlinearen Festkörpermedium mit einem aktiven Bereich, wobei der Aufbau dazu ausgebildet ist, aus in das Festkörpermedium eingebrachter Pumpstrahlung, unterstützt durch konstruktive Interferenz, ausgehende Laserstrahlung zu erzeugen, und mindestens zwei Temperaturaktoren zur unabhängigen Einstellung von Temperaturen in dem aktiven Bereich des Festkörpermediums, wobei ein erster Temperaturaktor dazu ausgebildet ist, durch Einstellen einer ersten Temperatur innerhalb eines ersten Abschnitts des aktiven Bereichs die Resonatorlänge einzustellen und wobei ein zweiter Temperaturaktor dazu ausgebildet ist, durch Einstellen einer zweiten Temperatur innerhalb eines zweiten Abschnitts des aktiven Bereichs die Phasen der erzeugten und an der Erzeugung der Laserstrahlung beteiligten Wellenlängen anzupassen.

Das Festkörpermedium kann insbesondere ein Kristall sein. Der aktive Bereich bezeichnet den nichtlinear reagierenden Bereich des Festkörpermediums, also den Bereich, in dem der Zusammenhang zwischen elektrischem Feld und elektrischer Polarisation nicht linear verläuft. Der aktive Bereich kann insbesondere eine periodische gepolte Nichtlinearität darstellen. Der Resonator kann beispielsweise ein Stehwellenresonator, insbesondere mit Umlenkspiegeln oder anderen optischen Zusatzkomponenten, oder ein Wanderwellenresonator, insbesondere ein Ringresonator sein. Der Resonator kann beispielsweise dreieckig oder gefaltet ("bow-tie"-Konfiguration) sein. Die Temperaturen können beispielsweise über Peltier-Elemente, ohmsche Heizelemente oder über die Absorption zusätzlich eingestrahlter Lichtfelder anderer Wellenlängen realisiert werden. Die Temperaturaktoren können also als Peltier-Elemente, ohmsche Heizelemente oder als Quellen von Lichtfeldern anderer Wellenlängen ausgebildet sein. Der optische Aufbau kann insbesondere einen optisch parametrischen Oszillator bilden bzw. umfassen.

Erfindungsgemäß ist vorgesehen, innerhalb des aktiven, also des nichtlinear reagierenden Bereichs des Festkörpermediums unterschiedliche Temperaturen einzustellen. In dem zweiten Abschnitt des aktiven Bereichs wird dabei die Phasenanpassungstemperatur eingestellt, wodurch die an der Erzeugung der Laserstrahlung beteiligten Wellenlängen in Phase gebracht werden. In dem ersten Abschnitt des aktiven Bereichs wird eine Temperatur eingestellt, die für eine oder mehrere der an der Erzeugung der Laserstrahlung beteiligten Wellenlängen das Erreichen der Resonanzbedingung gewährleistet. Dies wird, wie eingangs bereits erwähnt, durch eine Änderung der Länge des Resonators aufgrund thermischer Ausdehnung bzw. Kontraktion erreicht, oder dadurch, dass sich die optische Weglänge aufgrund der Temperaturabhängigkeit der Brechzahl des Festkörpermediums ändert. Es kann dabei vorgesehen sein, weitere Temperaturen innerhalb des aktiven Bereichs einzustellen, beispielsweise über weitere Temperaturaktoren, welche insbesondere zum Erreichen der Resonanzbedingung für weitere Wellenlängen dienen können. Beispielsweise kann die Resonatorlänge durch Einstellen einer dritten Temperatur innerhalb eines dritten Abschnitts des aktiven Bereichs zum Erreichen der Resonanz einer weiteren, zweiten Wellenlänge eingestellt werden, wie später noch erläutert wird.

Der Erfindung liegt dabei die Erkenntnis zugrunde, dass nicht der gesamte aktive Bereich des nichtlinearen Resonators auf der Phasenanpassungstemperatur gehalten werden muss, um eine effiziente Erzeugung von Laserstrahlung zu gewährleisten. Es wurde erkannt, dass die Erzeugung neuer Frequenzen aus der eingestrahlten Pumpstrahlung im Wesentlichen in der Nähe der Strahltaille (also im Fokus) stattfindet, und dass daher nur im Bereich dieser Strahltaille eine Phasenanpassung notwendig ist. An anderen Punkten des Festkörpermediums können hingegen durchaus andere Temperaturen vorherrschen, auch wenn diese dort womöglich zu einer Phasenfehlanpassung der beteiligten Wellenlängen führen. Folglich ist eine optimale Phasenanpassung nur in den Zonen des Festkörpermediums wichtig, an denen das Laserlicht eine hohe Intensität aufweist. An Stellen geringerer Laserintensität kann die Temperatur in dem nichtlinearen Festkörpermedium von der Phasenanpassungstemperatur abweichen, ohne dass die Frequenzkonversion dadurch signifikant negativ beeinflusst wird. Die Erfindung ermöglicht sowohl die Phasenanpassung wie auch die Resonanz, also die Resonatorlänge, über die Temperatur einzustellen. Hierbei erfolgt eine Temperatureinstellung, wie erläutert, nur innerhalb des aktiven Bereichs. Der erfindungsgemäße Resonator ist daher besonders kompakt. Insbesondere kann sich der aktive Bereich über das gesamte Festkörpermedium erstrecken, es kann also auf den aktiven Bereich umgebende nicht aktive Zonen (wie bei Zielinska) verzichtet werden, was wiederum einen besonders kompakten Resonator erlaubt und zudem die Herstellung vereinfacht. Auch kann auf piezoelektrische Elemente zur Einstellung der Resonatorlänge verzichtet werden, was die damit verbundenen, oben erläuterten Nachteile vermeidet. Der Resonator kann insbesondere monolithisch ausgestaltet sein, mit zwei an gegenüberliegenden Enden des Festkörpermediums aufgebrachten Spiegelflächen, wie später noch erläutert wird. Zudem kann die erste Temperatur und/oder die zweite Temperatur auf einen Sollwert geregelt werden, um einer eventuellen Änderung der Frequenz der Pumpstrahlung Rechnung zu tragen, wie später ebenfalls noch erläutert wird.

Das erfindungsgemäße Verfahren kann mit der erfindungsgemäßen Vorrichtung ausgeführt werden. Die erfindungsgemäße Vorrichtung ist zur Ausführung des erfindungsgemäßen Verfahrens geeignet. Ausgestaltungen des Verfahrens sowie der Vorrichtung werden im Folgenden gemeinsam erläutert.

Nach einer Ausgestaltung erstreckt sich der aktive Bereich über das gesamte Festkörpermedium. Das Festkörpermedium kann folglich ausschließlich aus dem aktiven, also dem nichtlinearen Bereich bestehen. Insbesondere kann das Festkörpermedium vollständig (periodisch) gepolt sein. Da es, wie oben erläutert, möglich ist auch innerhalb des aktiven Bereichs des Festkörpermediums unterschiedliche Temperaturen einzustellen, kann auf nicht-aktive Bereiche verzichtet werden. Das Festkörpermedium und damit der Resonator können somit insbesondere gegenüber dem durch Zielinska gezeigten Aufbau kompakter ausgestaltet werden. Darüber hinaus ist auch die Herstellung des Festkörpermediums vereinfacht, da aus einem einheitlichen Kristallmaterial ein Stück beliebiger Länge herausgeschnitten und verwendet werden kann.

Nach einer Ausgestaltung umfasst der Resonator zwei an gegenüberliegenden Enden des Festkörpermediums angeordnete Resonatorspiegel. Die Resonatorspiegel können dabei mit dem Festkörpermedium verbunden, insbesondere auf diese aufgebracht, oder separat von diesem angeordnet sein. Insbesondere können die Resonatorspiegel separat von dem Festkörpermedium in jeweils einem fixen Abstand angeordnet sein. Durch die Resonatorspiegel werden an der Erzeugung der Laserstrahlung beteiligte Wellen sowie auch neu erzeugte Wellen reflektiert. Dabei werden alle Umläufe einer Wellenlänge miteinander konstruktiv überlagert.

Nach einer weiteren Ausgestaltung sind die Resonatorspiegel als Spiegelflächen außenseitig auf den gegenüberliegenden Enden des Festkörpermediums aufgebracht. Das optisch nichtlineare Festkörpermedium bildet mit den Spiegelflächen folglich einen monolithischen Resonator. Dieser ist daher besonders kompakt, einfach herstellbar und aufgrund des Verzichts auf piezoelektrische Stellelemente auch stabiler im Betrieb. So kann eine über die Temperatur eingestellte Resonatorlänge zuverlässiger gehalten werden als eine über einen Piezo-Aktor eingestellte Resonatorlänge, da in letztgenanntem Fall aufgrund eines Rauschens der den Piezo-Aktor versorgenden Hochspannung die Resonatorlänge rauscht, wie eingangs erläutert. Die gegenüberliegenden, mit den Spiegelflächen versehenen Enden des Festkörpermediums sind dabei bevorzugt konvex ausgebildet, insbesondere sphärisch poliert. Bekanntermaßen muss sich bei einem optisch stabilen Resonator der Durchmesser des Laserstrahls ändern. Wird die Strahltaille (der Fokus) in der Mitte des Festkörpermediums angenommen, so erfolgt eine Aufweitung des Laserstrahls ausgehend von der Strahltaille in beide Richtungen entlang einer Hauptstrahlachse. Durch die konvexen Enden des Festkörpermediums wird gewährleistet, dass die Spiegelflächen stets senkrecht zu der Ausbreitungsrichtung der Strahlung stehen, so dass der sich aufweitende Laserstrahl vollständig zurück in das Festkörpermedium gelenkt wird. Für einen monolithischen Resonator ist insbesondere die separate Einstellbarkeit von drei unterschiedlichen Temperaturen sinnvoll, wie später noch erläutert wird.

Nach einer anderen Ausgestaltung sind die Resonatorspiegel separat von dem Festkörpermedium ausgebildet, wobei mindestens ein Stellelement vorgesehen ist zum Verstellen der Entfernung mindestens eines der Resonatorspiegel zu dem Festkörpermedium. Das Stellelement kann beispielsweise einen oder mehrere piezoelektrische Stellelemente, also Piezo-Aktoren, umfassen. Insbesondere können zwei Stellelemente vorgesehen sein, wobei ein erstes Stellelement die Entfernung eines ersten Resonatorspiegels zu dem Festkörpermedium einstellt und ein zweites Stellelement die Entfernung eines zweiten Resonatorspiegels zu dem Festkörpermedium einstellt. Über das mindestens eine Stellelement kann somit die Resonatorlänge zusätzlich geregelt werden. Im Allgemeinen erfolgt eine Änderung der Temperatur in dem Festkörpermedium aufgrund dessen zumeist geringer Wärmeleitfähigkeit nur langsam. Dies hat entsprechend eine langsame Änderung der Resonatorlänge zur Folge. Insbesondere bei einer Regelung der Temperatur, wie später noch erläutert, folgt damit nur ein langsames Erreichen der Resonanzbedingung. Ein nach dieser Ausgestaltung vorgesehenes Stellelement, insbesondere mit Piezo-Aktoren, erlaubt hingegen eine sehr schnelle Einstellung der Resonatorlänge. Insbesondere kann die Resonatorlänge dann schnell einer Wellenlängenänderung der eingestrahlten Pumpwelle nachgeregelt werden. Hierbei kann über das mindestens eine Stellelement insbesondere eine andere Wellenlänge der an der Erzeugung der Laserstrahlung beteiligten Wellenlängen zur Resonanz gebracht werden als über die zweite Temperatur. Somit können zwei Wellenlängen zur Resonanz gebracht werden, was die Effizienz der Konversion bzw. Erzeugung der Laserstrahlung erhöht. Auch kann über das mindestens eine Stellelement dieselbe Wellenlänge der an der Erzeugung der Laserstrahlung beteiligten Wellenlängen zur Resonanz gebracht werden wie über die zweite Temperatur. Diese Mechanismen können sich folglich ergänzen. Dies ist insbesondere sinnvoll, da dann ein eventuell vorgesehener Piezo-Aktor nicht mit Hochspannung betrieben werden muss und somit die oben bereits erwähnten Nachteile vermieden werden können. Zwar kann der Piezo-Aktor bei dem Verzicht auf ihn betreibende Hochspannung den Resonatorspiegel weniger stark auslenken. In Ergänzung mit der Einstellung der Resonatorlänge durch die Temperatur besteht jedoch ausreichend Bewegungsspielraum, um die Resonanz (wieder) zu erreichen. Die den Resonatorspiegeln zugewandten Enden des Festkörpermediums können eine anti-reflektierende Schicht aufweisen, um Strahlung zu dem jeweiligen Resonatorspiegel hindurch- und von diesem zurückzulassen.

Nach einer anderen Ausgestaltung ist ein erster Resonatorspiegel als Spiegelfläche außenseitig auf einem ersten Ende des Festkörpermediums aufgebracht und ein zweiter Resonatorspiegel separat von dem Festkörpermedium an einem dem ersten Ende gegenüberliegenden zweiten Ende des Festkörpermediums angeordnet, wobei ein Stellelement vorgesehen ist zum Verstellen der Entfernung des zweiten Resonatorspiegels zu dem Festkörpermedium. Der Resonator kann also - als Kombination der beiden vorgenannten Ausgestaltungen - eine unmittelbar mit dem Resonator verbundene Spiegelfläche sowie einen an dem gegenüberliegenden Ende angeordneten Spiegel aufweisen. Der zweite Resonatorspiegel ist dabei von dem zweiten Ende des Festkörpermediums insbesondere durch einen Luftspalt beabstandet und über ein Stellelement, insbesondere einen Piezo-Aktor verstellbar. Das dem zweiten Resonatorspiegel zugewandte zweite Ende des Festkörpermediums kann insbesondere eine anti-reflektierende Schicht aufweisen, um Strahlung zu dem zweiten Spiegel hindurch- und von diesem zurückzulassen. Es wird im Übrigen auf die obigen Ausführungen verwiesen, insbesondere kann auch hier eine Längenänderung des Resonators sowohl über die Temperatur wie auch über das Stellelement erfolgen.

Nach einer Ausgestaltung erfolgt ein Anpassen der Resonatorlänge durch Einstellen einer dritten Temperatur innerhalb eines dritten Abschnitts des aktiven Bereichs. Nach dieser Ausgestaltung können dann mindestens drei Temperaturaktoren zur Einstellung unterschiedlicher Temperaturen in dem aktiven Bereich des Festkörpermediums vorgesehen sein, wobei der dritte Temperaturaktor dazu ausgebildet ist, durch Einstellen einer dritten Temperatur innerhalb eines dritten Abschnitts des aktiven Bereichs die Resonatorlänge einzustellen. Es kann also vorgesehen sein, neben der ersten Temperatur innerhalb des ersten Abschnitts des aktiven Bereichs zum Anpassen der Resonatorlänge und der zweiten Temperatur innerhalb des zweiten Abschnitts des aktiven Bereichs um die Strahltaille zur Phasenanpassung einen dritten Abschnitt mit einer dritten Temperatur zu versehen, ebenfalls zum Anpassen der Resonatorlänge. Die dritte Temperatur kann sich insbesondere von der ersten Temperatur unterscheiden. Dies ist insbesondere bei dem oben erwähnten monolithischen Resonator sinnvoll, da hierdurch der Resonator für zwei Wellenlängen resonant wirken kann. Die Resonatorlänge kann somit derart eingestellt werden, dass zwei Wellenlängen der an der Erzeugung der Laserstrahlung beteiligten Wellenlängen Resonanz erreichen.

Nach einer Ausgestaltung erfolgt ein Anpassen der Resonatorlänge durch Einstellen einer vierten Temperatur innerhalb eines vierten Abschnitts des aktiven Bereichs. Nach dieser Ausgestaltung können dann mindestens vier Temperaturaktoren zur Einstellung unterschiedlicher Temperaturen in dem aktiven Bereich des Festkörpermediums vorgesehen sein, wobei der vierte Temperaturaktor dazu ausgebildet ist, durch Einstellen einer vierten Temperatur innerhalb eines vierten Abschnitts des aktiven Bereichs die Resonatorlänge einzustellen. Entsprechend der obigen Erläuterungen kann somit über die vierte Temperatur die Resonatorlänge für die Resonanz einer dritten Wellenlänge eingestellt werden.

Nach einer Ausgestaltung wird die erste Temperatur und/oder die zweite Temperatur auf einen, insbesondere von der Frequenz der Pumpstrahlung abhängigen, Soll-Wert geregelt. Nach dieser Ausgestaltung kann die Vorrichtung eine Regelungseinheit zur Regelung der ersten Temperatur und/oder der zweiten Temperatur auf einen, insbesondere von der Frequenz der Pumpstrahlung abhängigen, Soll-Wert umfassen. Es kann somit eine Ist-Temperatur in dem ersten und/oder zweiten Abschnitt des Festkörpermediums gemessen und durch die Regelungseinheit mit einer Soll-Temperatur für den ersten und/oder zweiten Abschnitt verglichen werden, wobei die Regelungseinheit weiter dazu ausgebildet sein kann, bei einer Abweichung zwischen Soll- und Ist-Temperatur die erste Temperatur und/oder die zweite Temperatur zu erhöhen oder zu verringern bis die Abweichung verschwindet. Durch eine solche Rückkopplung können beispielsweise bei eventuell auftretenden Energieverlusten die Temperaturen in dem ersten und/oder dem zweiten Abschnitt stabil gehalten werden. Insbesondere kann die Regelung abhängig von der Frequenz der Pumpstrahlung erfolgen, d.h. es kann abhängig von der Frequenz der Pumpstrahlung ein Soll-Wert für die jeweilige Temperatur vorgegeben werden. In diesem Fall kann die Frequenzverstimmung zwischen Laserstrahlung und Resonanzbedingung durch die Regelungseinheit bestimmt werden und aufgrund der Verstimmung die erste Temperatur und/oder die zweite Temperatur durch die Regelungseinheit erhöht oder verringert werden bis die Verstimmung verschwindet. Es wird folglich der jeweilige Temperatur-Sollwert dynamisch den sich ändernden äußeren Bedingungen nachgefahren. Die Frequenzverstimmungen können mittels bekannter Verfahren, z.B. nach Pound, Drever und Hall, gemessen und ausgewertet werden. Eine derart dynamisch rückkoppelnde Regelung ist sinnvoll, wenn sich die eingestrahlten Laserfrequenzen bzw. Wellenlängen zeitlich ändern, zum Beispiel, weil der Pumplaser nicht stabil genug ist. In diesem Fall, kann die jeweilige Soll-Temperatur kontinuierlich angepasst und somit eine sich ändernde Frequenz der Pumpstrahlung berücksichtigt werden. Damit ist ein effizienter Betrieb insbesondere von monolithischen nichtlinearen Resonatoren gewährleistet. Ändert sich die optische Frequenz langsam, so kann über die Änderung der Temperaturen sowohl die Phasenanpassung als auch die optische Resonatorlänge für die beteiligten Wellenlängen den sich ändernden Wellenlängen nachgefahren werden. Auch eventuell weitere vorgesehene Temperaturen in weiteren Abschnitten des aktiven Bereichs können entsprechend geregelt werden.

Ausführungsbeispiele der Erfindung werden im Folgenden anhand von Figuren erläutert. Es zeigen
- Fig. 1: eine schematische Darstellung einer erfindungsgemäßen Vorrichtung,
- Fig. 2: eine schematische Schnittansicht eines nichtlinearen Resonators gemäß einer ersten Ausgestaltung,
- Fig. 3: eine schematische Schnittansicht eines nichtlinearen Resonators gemäß einer zweiten Ausgestaltung,
- Fig. 4: eine schematische Schnittansicht eines nichtlinearen Resonators gemäß einer dritten Ausgestaltung,
- Fig. 5: eine schematische Schnittansicht eines nichtlinearen Resonators gemäß einer vierten Ausgestaltung,
- Fig. 6: eine schematische Schnittansicht eines nichtlinearen Resonators gemäß einer fünften Ausgestaltung,
- Fig. 7: eine Messkurve der Ausgangsleistung über die Zeit eines Resonators gemäß dem Aufbau aus Fig. 4, und
- Fig. 8: ein Regelungsschema zur Temperaturregelung für einen Resonator gemäß dem Aufbau aus Fig. 2.

Sofern nichts anderes angegeben ist, bezeichnen gleiche Bezugszeichen gleiche Gegenstände.

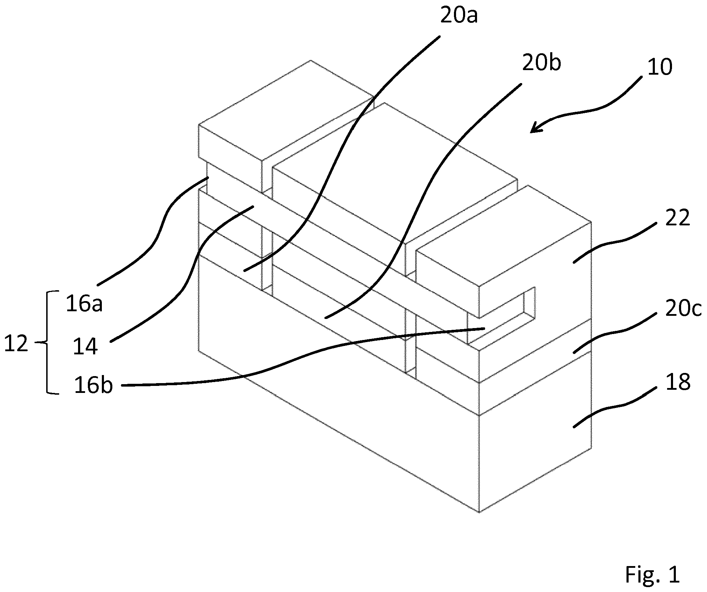

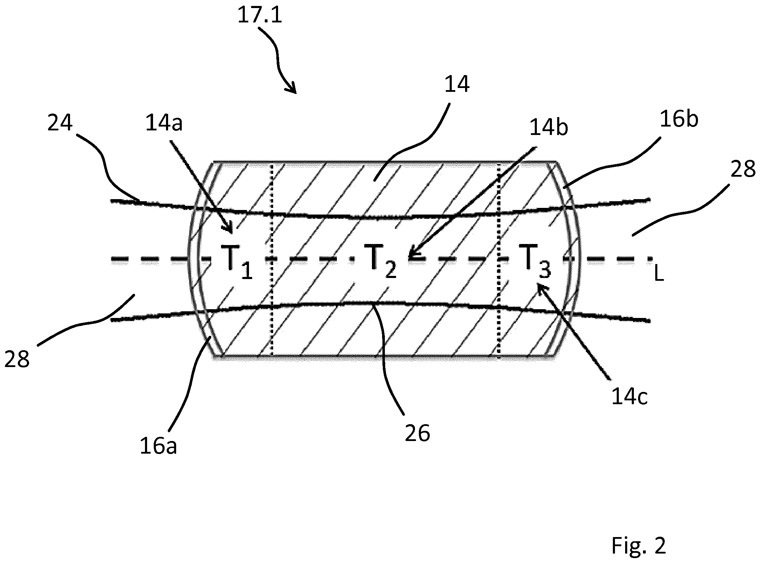

In Figur 1 ist eine erfindungsgemäße Vorrichtung zur Erzeugung von Laserstrahlung dargestellt. Die Vorrichtung 10 umfasst einen (monolithischen) Frequenzkonvertierer bzw. Verstärker für Laserstrahlung, welcher vorliegend als optisch parametrischer Oszillator 12 ausgebildet ist. Dieser umfasst ein nichtlineares Festkörpermedium 14 mit Resonatorspiegeln 16a, 16b, die als Spiegelflächen auf gegenüberliegenden Enden des Festkörpermediums 14 aufgebracht sind. Das Festkörpermedium 14 verfügt über einen aktiven Bereich, der sich über das gesamte Festkörpermedium erstreckt. Das gesamte Festkörpermedium 14 reagiert folglich nichtlinear. Die Spiegelflächen 16a, 16b bilden mit dem nichtlinearen Festkörpermedium 14 einen nichtlinearen Resonator 17.1. Weiterhin umfasst die Vorrichtung 10 einen als Kälte- bzw. Wärmereservoir dienenden Sockel 18 sowie drei Temperaturaktoren 20a, 20b, 20c, insbesondere Peltier-Elemente, zum Einstellen von Temperaturen T₁, T₂, T₃ in dem jeweils darüber liegenden Abschnitt des nichtlinearen Festkörpermediums 14. Der Oszillator 12 wird zudem von einer wärmeleitenden Fassung 22 der Vorrichtung 10 abschnittsweise umrahmt. Die Fassung 22 kann insbesondere aus thermisch gut leitenden Materialien wie Kupfer, Silber, Gold oder eine Kombination aus diesen bestehen. Der nichtlineare Resonator 12 ist dazu ausgebildet, aus in das Festkörpermedium 14 eingebrachter Pumpstrahlung, unterstützt durch konstruktive Interferenz, ausgehende Laserstrahlung zu erzeugen. Die Funktionsweise des soeben beschriebenen, nichtlinearen Resonators 17.1 wird im Folgenden anhand von Figur 2 erläutert.

Figur 2 zeigt grob schematisch einen Schnitt durch einen nichtlinearen Resonator 17.1 mit drei unterschiedlichen Temperaturbereichen T₁, T₂, T₃ wie in Fig. 1 gezeigt. Der Aufbau des nichtlinearen Resonators entspricht dem der Figur 1. Es ist hierbei ersichtlich, dass beide gegenüberliegenden Enden des Festkörpermediums 14, auf welchen die Resonatorspiegel 16a, 16b als Spiegelflächen außenseitig aufgebracht sind, konvex gewölbt sind. Die Krümmung ist hier zur Verdeutlichung übertrieben dargestellt. Es handelt sich um einen monolithischen Resonator. Der aktive Bereich erstreckt sich auch hier, sowie in allen weiteren Ausführungsbeispielen, über das gesamte Festkörpermedium 14, welches also vollständig nichtlinear reagiert. Das nichtlineare Festkörpermedium 14 besteht in dieser Ausgestaltung aus drei Abschnitten 14a, 14b, 14c, deren Temperaturen aufgrund der (in Fig. 2 nicht dargestellten) Temperaturaktoren 20a, 20b, 20c unabhängig voneinander geregelt werden können. Die in das Festkörpermedium 14 eingebrachte Pumpstrahlung erzeugt einen entlang einer Längsachse L des Festkörpermediums 14 verlaufenden Laserstrahl 24, mit einer zentral in der Mitte des Festkörpermediums 14 angeordneten Strahltaille 26 und sich ausgehend von der Strahltaille 26 aufweitenden Strahlabschnitten 28. Der Durchmesser des Laserstrahls 24 ändert sich folglich entlang der Längsachse L, was für den Betrieb eines stabilen optischen Resonators notwendig ist. Durch die konvexen Enden des Festkörpermediums wird gewährleistet, dass die Spiegelflächen 16a, 16b stets senkrecht zu der Ausbreitungsrichtung der Strahlung stehen, so dass die sich aufweitenden Strahlabschnitte 28 vollständig zurück in das Festkörpermedium 14 gelenkt werden.

Über den Temperaturaktor 20a wird die in dem ersten Abschnitt 14a vorherrschende Temperatur auf den Wert T₁ geregelt. Somit wird aufgrund der thermischen Ausdehnung bzw. der Änderung der Brechzahl des Festkörpermediums 14 in dem ersten Abschnitt 14a der Resonatorspiegel 16a verschoben und so die Länge des nichtlinearen Resonators 17.1 derart geregelt, dass die Resonanzbedingung für eine erste Wellenlänge der an der Erzeugung der Laserstrahlung teilnehmenden Wellenlängen erfüllt wird. Über den Temperaturaktor 20b wird zudem die Temperatur des zweiten Abschnitts 14b auf den Wert T₂ geregelt, welcher der Phasenanpassungstemperatur der an der Erzeugung der Laserstrahlung teilnehmenden Wellenlängen entspricht. Somit wird die Phasenanpassung erreicht. Weiterhin ist gemäß diesem Ausführungsbeispiel ein dritter Temperaturaktor 20c vorgesehen, der den dritten Abschnitt 14c auf die Temperatur T₃ regelt. Dies ermöglicht - durch Verschieben des Resonatorspiegels 16b und der damit verbundenen Längenänderung des Resonators 17.1 - die Regelung einer weiteren, zweiten Wellenlänge auf ihre Resonanzbedingung. Die unterschiedlichen Wellenlängen werden dabei in unterschiedlichen Tiefen in den Resonatorspiegeln reflektiert. Die Temperaturen werden hierbei (sowie in den weiteren Ausführungsbeispielen) nicht nur eingestellt, sondern über ein später noch erläutertes Regelungsverfahren auf den jeweiligen Wert geregelt.

Wie eingangs erläutert, muss nicht der gesamte aktive Bereich des nichtlinearen Resonators - also vorliegend nicht das gesamte Festkörpermedium - auf der Phasenanpassungstemperatur gehalten werden, da die Erzeugung neuer Frequenzen aus der eingestrahlten Pumpstrahlung im Wesentlichen in der Nähe der Strahltaille 26 (also im Fokus) stattfindet. Somit ist nur im Abschnitt 14b eine Phasenanpassung notwendig. Eine von der Phasenanpassungstemperatur abweichende Temperatur in den Abschnitten 14a, 14c führt zwar zu einer Phasenfehlanpassung der beteiligten Wellenlängen, was jedoch relativ unschädlich ist. Die erfindungsgemäße Vorrichtung ermöglicht es, sowohl die Phasenanpassung wie auch die Resonanz, also die entlang der Längsachse L verlaufende Resonatorlänge, über die Temperatur einzustellen. In der beschriebenen Ausführung kann für zwei Wellenlängen Resonanz erreicht werden. Der beschriebene nichtlineare Resonator ist besonders kompakt, da der aktive Bereich das gesamte Festkörpermedium durchzieht, da die Temperatureinstellung nur innerhalb des aktiven Bereichs stattfindet und da vorliegend auf externe Stellelemente und Spiegel verzichtet werden kann.

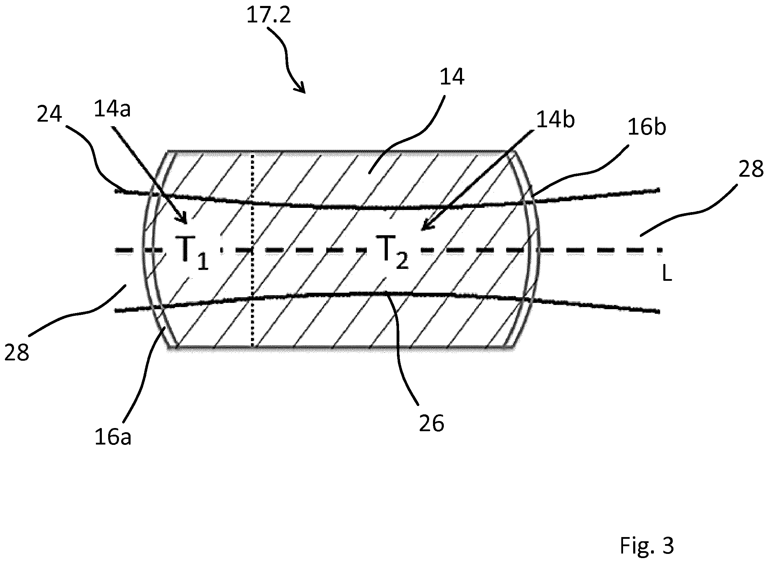

Der nichtlineare Resonator 17.2 gemäß Figur 3 unterscheidet sich von dem in Figur 2 gezeigten Resonator 17.1 dadurch, dass das nichtlineare Festkörpermedium 14 lediglich zwei Abschnitte 14a, 14b unterschiedlicher Temperatur aufweist. Über die Temperatur T₁ in dem ersten Abschnitt 14a wird auf die Resonanz einer ersten Wellenlänge geregelt. Die Temperatur T₂ wird wiederum auf die Phasenanpassungstemperatur geregelt. Diese Ausgestaltung ist aufgrund des Verzichts auf einen dritten Temperaturbereich einfacher und ist ausreichend, wenn der Resonator nur eine der Wellenlängen unterstützen soll.

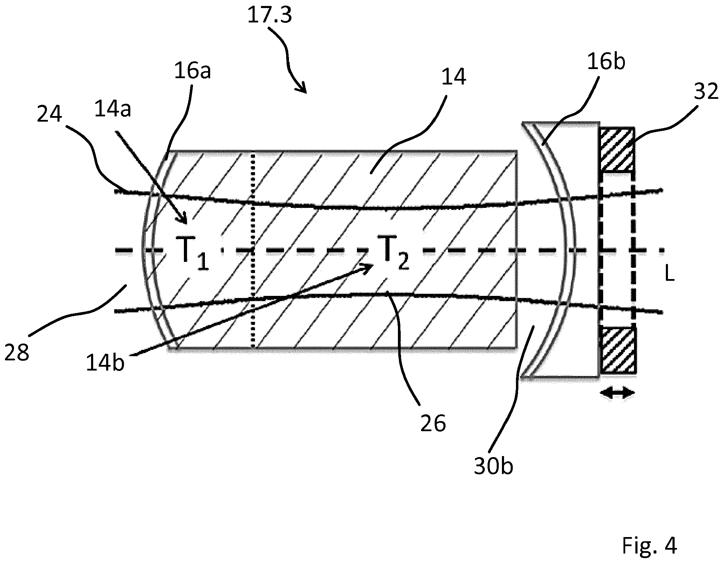

Der nichtlineare Resonator 17.3 gemäß Figur 4 unterscheidet sich von dem in Figur 3 gezeigten Resonator 17.2 dadurch, dass das Festkörpermedium 14 nur auf einer Seite mit einer Spiegelfläche als Resonatorspiegel 16a versehen ist. Der andere Resonatorspiegel 16b ist hier durch einen Luftspalt 30 von dem Festkörpermedium 14 beabstandet und durch ein piezoelektrisches Stellelement 32 entlang der Längsachse L verstellbar, wie durch den Doppelfeil angedeutet. Es handelt sich somit um einen halb-monolithischen Resonator. Das dem Resonatorspiegel 16b zugewandte Ende des Festkörpermediums 14 ist in dieser Ausführung nicht konvex ausgebildet und mit einer nicht dargestellten anti-reflektierenden Beschichtung versehen. Somit wird gewährleistet, dass die Laserstrahlung zu dem Resonatorspiegel 16b und von diesem zurück in das Festkörpermedium gelangen kann. Mittels des piezoelektrischen Stellelements 32 kann die Entfernung des Resonatorspiegels 16b zu dem Resonatorspiegel 16a und somit die Resonatorlänge geändert werden, wobei sich die Breite des Luftspalts 30 ändert. Die Länge des Resonators 17.3 kann bei diesem Ausführungsbeispiel folglich sowohl über die Temperatur T₁ als auch über das piezoelektrische Stellelement 32 auf Resonanz für eine oder zwei Wellenlängen gehalten werden. Ist das Ziel lediglich die Resonanz einer Wellenlänge, so erlaubt das piezoelektrische Stellelement eine schnelle Aktuierung bei einem Betrieb mit geringer Spannung. Eine Hochspannung ist nicht erforderlich, da starke - aber dafür langsame Längenänderungen - durch die Temperatur T₁ erfolgen.

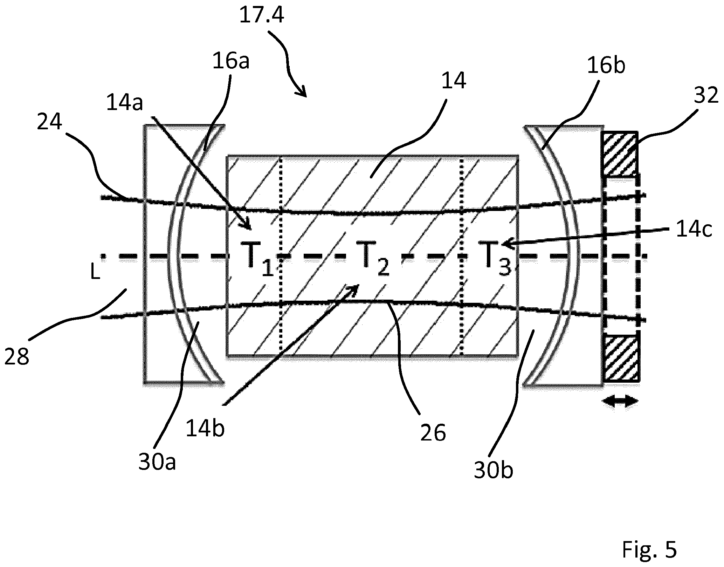

Der nichtlineare Resonator 17.4 gemäß Figur 5 unterscheidet sich von dem in Figur 4 gezeigten Resonator 17.3 dadurch, dass keine auf dem Festkörpermedium 14 aufgebrachten Spiegelflächen vorgesehen sind, sondern beide Resonatorspiegel 16a, 16b durch jeweils einen Luftspalt 30a, 30b von dem Festkörpermedium 14 beabstandet sind. In dem vorliegenden Ausführungsbeispiel ist nur der Resonatorspiegel 16b durch ein, insbesondere piezoelektrisches, Stellelement 32 entlang der Längsachse L verstellbar, und so der Luftspalt 30b veränderbar. Es kann jedoch vorgesehen sein, dass auch der Resonatorspiegel 16a ein Stellelement, insbesondere ein piezoelektrisches Stellelement, zur Veränderung des Luftspalts 30a aufweist. Es handelt sich somit um einen nicht-monolithischen Resonator. Auch das dem Resonatorspiegel 16a zugewandte Ende des Festkörpermediums 14 ist in dieser Ausführung nicht konvex ausgebildet und mit einer nicht dargestellten anti-reflektierenden Beschichtung versehen. Zudem gliedert sich das Festkörpermedium 14 hier wieder in drei Abschnitte 14a, 14b, 14c mit separat regelbaren Temperaturen T₁, T₂, T₃, so wie bei dem Resonator 17.1 aus Fig. 2. Die Länge des Resonators 17.3 kann hierbei über die Temperatur T₁, die Temperatur T₂ sowie über das piezoelektrische Stellelement 32 auf Resonanz für bis zu drei Wellenlängen gehalten werden.

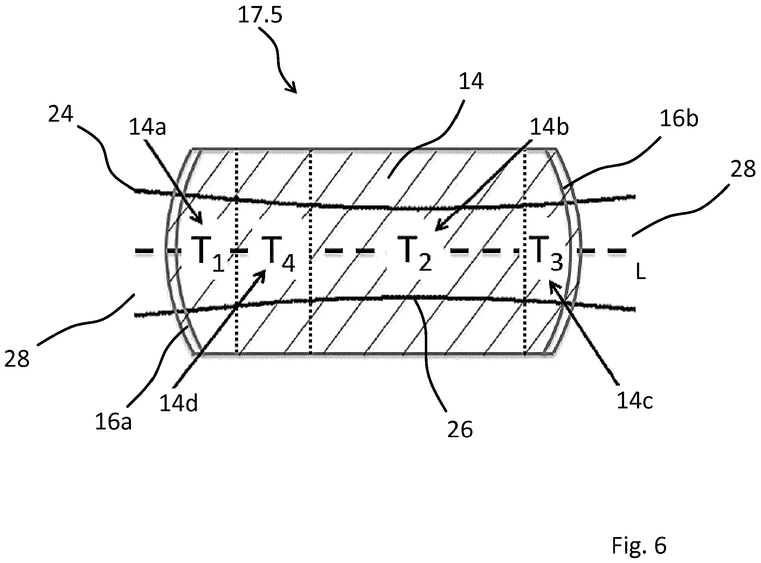

Der nichtlineare Resonator 17.5 gemäß Figur 6 unterscheidet sich von dem in Figur 2 gezeigten Resonator 17.1 dadurch, dass das Festkörpermedium 14 einen weiteren Abschnitt 14d mit separater Temperaturregelung umfasst. Ein weiterer, nicht dargestellter, Temperaturaktor regelt hierbei über die Temperatur T4 die Resonatorlänge auf Resonanz für eine weitere, dritte Wellenlänge. Dies ist beispielsweise für eine Summenfrequenzerzeugung sinnvoll.

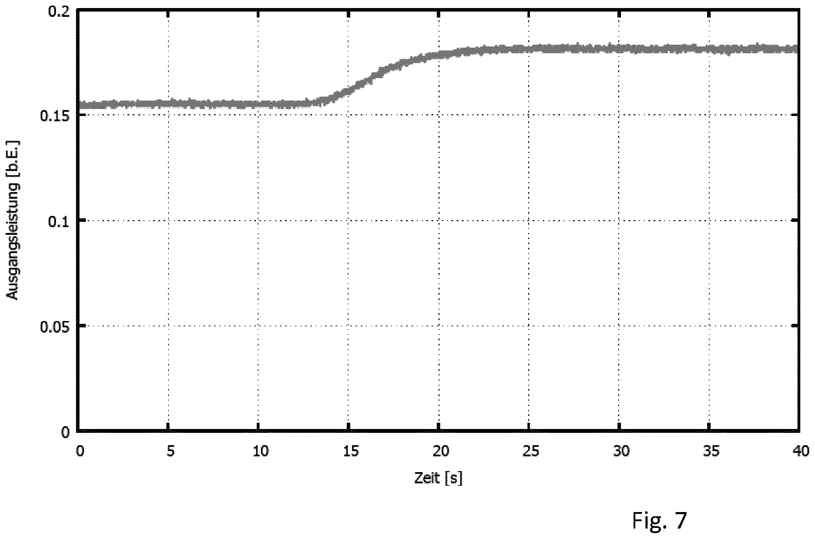

Figur 7 zeigt eine Messkurve der Ausgangsleistung eines nichtlinearen Resonators gemäß Figur 4. Gezeigt ist die Leistung von frequenzverdoppeltem Licht bei 775 nm aufgetragen über die Zeit. Der Resonator unterstützt 1550 nm und 775 nm. Während der gesamten Messzeit wurde die Position des Spiegels 16b rückkoppelnd auf Resonanz für 775 nm gehalten. T₂ sowie auch T₁ wurden auf der Phasenanpassungstemperatur gehalten. Dabei war das eingestrahlte Licht bei 1550 nm dicht an der Resonanz aber nicht exakt. In Sekunde 13 wurde T₁ minimal geändert und so die Resonanz für 1550 nm optimiert. Als Konsequenz steigt die Effizienz, also die Ausgangsleistung bei gleichbleibender Eingangsleistung. Die Lichtausbeute steigt in diesem Beispiel um etwa 15%. Der Wert ist in diesem Beispiel moderat, da zufällig auch schon vor der Optimierung von T₁ ein Arbeitspunkt dicht an dem optimalen Parametersatz existierte.

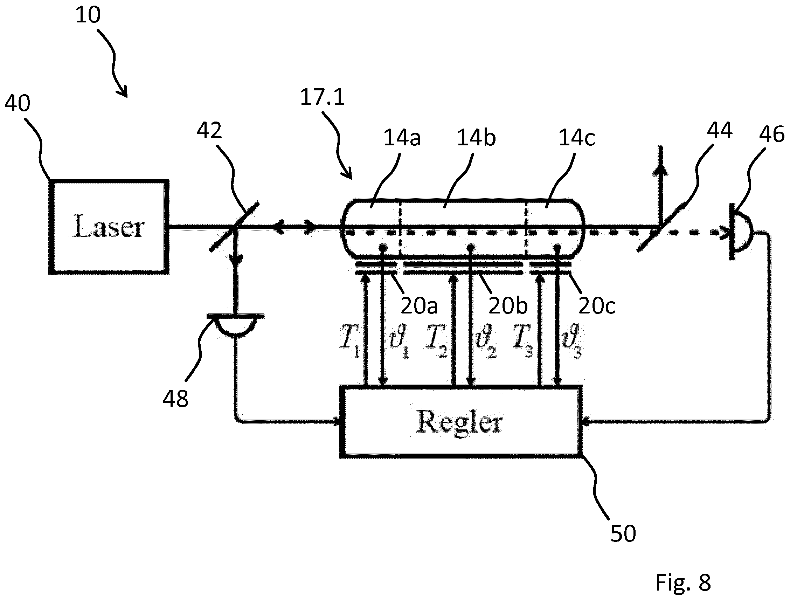

Figur 8 zeigt ein Regelungsschema für den nichtlinearen Resonator 17.1 gemäß Figur 2 zur Regelung der Temperaturen auf ihre jeweiligen Soll-Werte T₁, T₂, T₃. Die Vorrichtung 10 umfasst hierbei eine Laserquelle 40, über die Pumpstrahlung in den nichtlinearen Resonator 17.1 eingestrahlt wird. Die Pumpstrahlung durchtritt einen teildurchlässigen Spiegel 42, gelangt in den Resonator 17.1 und erzeugt die gewünschte Laserstrahlung. Ein Teil der Laserstrahlung wird aus dem Resonator ausgekoppelt und über einen teildurchlässigen Spiegel 44 aus der Vorrichtung 10 geführt. Ein Teil der so ausgekoppelten Laserstrahlung durchtritt dabei den teildurchlässigen Spiegel 44 und wird zu einer ersten Messeinrichtung 46 geleitet. Zudem wird ein weiterer Teil der erzeugten Laserstrahlung in Richtung des teildurchlässigen Spiegels 42 aus dem Resonator 17.1 ausgekoppelt und durch diesen zu einer zweiten Messeinrichtung 48 geleitet. Der mittlere Abschnitt 14b des Festkörpermediums 14 des Resonators 17.1 wird konstant auf Temperatur T₂ gehalten. Dazu wird die Temperatur an diesem Abschnitt gemessen. Ein Regler 50 ermittelt eine eventuelle Abweichung zwischen dem Temperaturmesswert ϑ₂ und dem Sollwert T₂ und steuert zum Ausgleich der Abweichung den Temperaturaktor 20b an, um den Abschnitt 14b zu heizen oder zu kühlen bis T₂ = ϑ₂ gilt. Die beiden äußeren Abschnitte 14a, 14c können in gleicher Art und Weise unabhängig voneinander rückkoppelnd geregelt werden, d.h. mit jeweils einem (anderen) statischen Soll-Wert für die Temperaturen T₁, T₃. Wobei dann die Abweichung der Messwerte ϑ₁, ϑ₃ von den Soll-Werten T₁, T₃ ermittelt und anschließend nachgeregelt wird. Die beiden Abschnitte 14a, 14c können aber alternativ deutlich effektiver dynamisch rückkoppelnd geregelt werden. In diesem Fall wird der jeweilige Temperatur-Sollwert T₁, T₃ der Regelung dynamisch den sich ändernden äußeren Bedingungen nachgefahren, z.B. der Änderung der eingestrahlten Wellenlänge. Die Information, ob und in welche Richtung sich eine Wellenlänge von der Resonanz fortbewegt, kann durch Detektion eines Teils der erzeugten Laserstrahlung erhalten werden. Hierfür werden die an den Messeinrichtungen 46, 48 detektierten Frequenzverstimmungen von Resonanz mittels bekannter Verfahren, z.B. nach Pound, Drever und Hall, ausgewertet. Dieses Regelungsverfahren ist unter entsprechender Abwandlung auch für die nichtlinearen Resonatoren 17.2, 17.3, 17.4 und 17.5 anwendbar.

Die Phasenanpassung und die optische(n) Resonatorlänge(n) für die beteiligten Wellenlängen können mit der erfindungsgemäßen Vorrichtung bzw. dem erfindungsgemäßen Verfahren gleichzeitig auf optimale Werte eingestellt werden, was die Effizienz von Frequenzkonversion signifikant erhöht. Insbesondere ist dies unabhängig von der geometrischen Form des Resonators. Mit der erfindungsgemäßen Vorrichtung bzw. dem erfindungsgemäßen Verfahren kann neben optisch parametrischen Prozessen, wie insbesondere der Erzeugung von gequetschtem Licht, auch eine Frequenzverdopplung, eine Summenfrequenzerzeugung sowie eine Frequenzmischung erreicht werden. Dabei können zwei oder drei kopropagierende Wellenlängen beteiligt sein, deren gleichzeitige Resonanz (zusammen mit der Phasenanpassung) die Effizienz erhöht.

Die Arbeiten, die zu dieser Erfindung geführt haben, wurden vom Europäischen Forschungsrat im Rahmen des Siebten Rahmenprogramms der Europäischen Union (FP7/2007-2013)/ERC grant agreement Nr. 339897 gefördert.

## Patentansprüche

1. Verfahren zur Erzeugung von Laserstrahlung mittels eines temperaturkontrollierten optischen Aufbaus (12) umfassend ein in einem Resonator (17.1, 17.2, 17.3, 17.4, 17.5) angeordnetes, optisch nichtlineares Festkörpermedium (14) mit einem aktiven Bereich, wobei in das Festkörpermedium (14) eingebrachte Pumpstrahlung, unterstützt durch konstruktive Interferenz, ausgehende Laserstrahlung erzeugt, wobei durch Anpassen der Resonatorlänge durch Einstellen einer ersten Temperatur (T₁) innerhalb eines ersten Abschnitts (14a) des aktiven Bereichs und Anpassen der Phasen der erzeugten und der an der Erzeugung der Laserstrahlung beteiligten Wellenlängen durch Einstellen einer zweiten Temperatur (T₂) innerhalb eines zweiten Abschnitts (14b) des aktiven Bereichs, wobei sich der aktive Bereich über das gesamte Festkörpermedium (14) erstreckt.

2. Verfahren nach Anspruch 1, **dadurch gekennzeichnet, dass** der Resonator (17.1, 17.2, 17.3, 17.4, 17.5) zwei an gegenüberliegenden Enden des Festkörpermediums (14) angeordnete Resonatorspiegel (16a, 16b) umfasst.

3. Verfahren nach Anspruch 2, **dadurch gekennzeichnet, dass** die Resonatorspiegel (16a, 16b) als Spiegelflächen außenseitig auf den gegenüberliegenden Enden des Festkörpermediums (14) aufgebracht sind oder, dass die Resonatorspiegel (16a, 16b) separat von dem Festkörpermedium (14) ausgebildet sind, wobei mindestens ein Stellelement (32) vorgesehen ist zum Verstellen der Entfernung (30a, 30b) mindestens eines der Resonatorspiegel (16a, 16b) zu dem Festkörpermedium (14) oder, dass ein erster Resonatorspiegel (16a) als Spiegelfläche außenseitig auf einem ersten Ende des Festkörpermediums (14) aufgebracht ist und dass ein zweiter Resonatorspiegel (16b) separat von dem Festkörpermedium (14) an einem dem ersten Ende gegenüberliegenden zweiten Ende des Festkörpermediums (14) angeordnet ist, wobei ein Stellelement (32) vorgesehen ist zum Verstellen der Entfernung des zweiten Resonatorspiegels (16b) zu dem Festkörpermedium (14).

4. Verfahren nach einem der vorhergehenden Ansprüche, **gekennzeichnet durch** Anpassen der Resonatorlänge durch Einstellen einer dritten Temperatur (T₃) innerhalb eines dritten Abschnitts (14c) des aktiven Bereichs.

5. Verfahren nach Anspruch 4, **gekennzeichnet durch** Anpassen der Resonatorlänge durch Einstellen einer vierten Temperatur (T₄) innerhalb eines vierten Abschnitts (14d) des aktiven Bereichs.

6. Verfahren nach einem der vorhergehenden Ansprüche, **dadurch gekennzeichnet, dass** die erste Temperatur (T₁) und/oder die zweite Temperatur (T₂) auf einen, insbesondere von der Frequenz der Pumpstrahlung abhängigen, Soll-Wert (T₁, T₂) geregelt wird.

7. Vorrichtung zur Erzeugung von Laserstrahlung, umfassend einen temperaturkontrollierten optischen Aufbau (12) mit einem in einem Resonator (17.1, 17.2, 17.3, 17.4, 17.5) angeordneten, optisch nichtlinearen Festkörpermedium (14) mit einem aktiven Bereich, wobei der Aufbau (12) dazu ausgebildet ist, aus in das Festkörpermedium (14) eingebrachter Pumpstrahlung, unterstützt durch konstruktive Interferenz, ausgehende Laserstrahlung zu erzeugen, **gekennzeichnet durch** mindestens zwei Temperaturaktoren (20a, 20b, 20c) zur unabhängigen Einstellung von Temperaturen (T₁, T₂, T₃) in dem aktiven Bereich des Festkörpermediums (14), wobei ein erster Temperaturaktor (20a) dazu ausgebildet ist, durch Einstellen einer ersten Temperatur (T₁) innerhalb eines ersten Abschnitts (14a) des aktiven Bereichs die Resonatorlänge einzustellen und wobei ein zweiter Temperaturaktor (20b) dazu ausgebildet ist, durch Einstellen einer zweiten Temperatur (T₂) innerhalb eines zweiten Abschnitts (14b) des aktiven Bereichs die Phasen der erzeugten und an der Erzeugung der Laserstrahlung beteiligten Wellenlängen anzupassen, wobei sich der aktive Bereich über das gesamte Festkörpermedium (14) erstreckt.

8. Vorrichtung nach Anspruch 7, **dadurch gekennzeichnet, dass** der Resonator (17.1, 17.2, 17.3, 17.4, 17.5) zwei an gegenüberliegenden Enden des Festkörpermediums (14) angeordnete Resonatorspiegel (16a, 16b) umfasst.

9. Vorrichtung nach Anspruch 8, **dadurch gekennzeichnet, dass** die Resonatorspiegel (16a, 16b) als Spiegelflächen außenseitig auf den gegenüberliegenden Enden des Festkörpermediums (14) aufgebracht sind oder
die Resonatorspiegel (16a, 16b) separat von dem Festkörpermedium (14) ausgebildet sind, wobei mindestens ein Stellelement (32) vorgesehen ist zum Verstellen der Entfernung (30a, 30b) mindestens eines der Resonatorspiegel (16a, 16b) zu dem Festkörpermedium (14) oder
ein erster Resonatorspiegel (16a) als Spiegelfläche außenseitig auf einem ersten Ende des Festkörpermediums (14) aufgebracht ist und dass ein zweiter Resonatorspiegel (16b) separat von dem Festkörpermedium (14) an einem dem ersten Ende gegenüberliegenden zweiten Ende des Festkörpermediums (14) angeordnet ist, wobei ein Stellelement (32) vorgesehen ist zum Verstellen der Entfernung des zweiten Resonatorspiegels (16b) zu dem Festkörpermedium (14).

10. Vorrichtung nach einem der Ansprüche 7 bis 9, **gekennzeichnet durch** mindestens drei Temperaturaktoren (20a, 20b, 20c) zur Einstellung von Temperaturen (T₁, T₂, T₃) in dem aktiven Bereich des Festkörpermediums (14), wobei der dritte Temperaturaktor (20c) dazu ausgebildet ist, durch Einstellen einer dritten Temperatur (T₃) innerhalb eines dritten Abschnitts (14c) des aktiven Bereichs die Resonatorlänge einzustellen.

11. Vorrichtung nach Anspruch 10, **gekennzeichnet durch** mindestens vier Temperaturaktoren zur Einstellung unterschiedlicher Temperaturen (T₁, T₂, T₃, T₄) in dem aktiven Bereich des Festkörpermediums (14), wobei der vierte Temperaturaktor dazu ausgebildet ist, durch Einstellen einer vierten Temperatur (T₄) innerhalb eines vierten Abschnitts (14d) des aktiven Bereichs die Resonatorlänge einzustellen.

12. Vorrichtung nach einem der Ansprüche 7 bis 11, **gekennzeichnet durch** eine Regelungseinheit (50) zur Regelung der ersten Temperatur (T₁) und/oder der zweiten Temperatur (T₂) auf einen, insbesondere von der Frequenz der Pumpstrahlung abhängigen, Soll-Wert (T₁, T₂).

## Claims

1. A method for generating laser radiation by means of a temperature-controlled optical setup (12), comprising an optically nonlinear solid-state medium (14) having an active region, which is arranged in a resonator (17.1, 17.2, 17.3, 17.4, 17.5), wherein pump radiation introduced into the solid-state medium (14), supported by constructive interference, generates outgoing laser radiation, wherein by adapting the resonator length by setting a first temperature (T₁) within a first section (14a) of the active region and adapting the phases of the wavelengths generated and involved in the generation of the laser radiation by setting a second temperature (T₂) within a second section (14b) of the active region, wherein the active region extends over the entire solid-state medium (14).

2. The method according to Claim 1, **characterized in that** the resonator (17.1, 17.2, 17.3, 17.4, 17.5) comprises two resonator mirrors (16a, 16b) arranged at opposite ends of the solid-state medium (14).

3. The method according to Claim 2, **characterized in that** the resonator mirrors (16a, 16b) are applied as mirror surfaces on the outside of the opposite ends of the solid-state medium (14) or the resonator mirrors (16a, 16b) are configured separately from the solid-state medium (14), wherein at least one adjusting element (32) is provided for adjusting the distance (30a, 30b) of at least one of the resonator mirrors (16a, 16b) from the solid-state medium (14) or a first resonator mirror (16a) is applied as a mirror surface on the outside of a first end of the solid-state medium (14) and a second resonator mirror (16b) is arranged separately from the solid-state medium (14) at a second end of the solid-state medium (14) opposite the first end, wherein an adjusting element (32) is provided for adjusting the distance of the second resonator mirror (16b) from the solid-state medium (14).

4. The method according to one of the preceding claims, **characterized by** adjusting the resonator length by setting a third temperature (T₃) within a third section (14c) of the active region.

5. The method according to Claim 4, **characterized by** adjusting the resonator length by setting a fourth temperature (T₄) within a fourth section (14d) of the active region.

6. The method according to one of the preceding claims, **characterized in that** the first temperature (T₁) and/or the second temperature (T₂) is/are controlled to a nominal value (T₁, T₂) which depends in particular on the frequency of the pump radiation.

7. A device for generating laser radiation, comprising a temperature-controlled optical setup (12) with an optically nonlinear solid-state medium (14) having an active region, which is arranged in a resonator (17.1, 17.2, 17.3, 17.4, 17.5), wherein the setup (12) is configured to generate outgoing laser radiation from pump radiation introduced into the solid-state medium (14), supported by constructive interference, **characterized by** at least two temperature actuators (20a, 20b, 20c) for independently setting temperatures (T₁, T₂, T₃) in the active region of the solid-state medium (14), wherein a first temperature actuator (20a) is configured to set the resonator length by setting a first temperature (T₁) within a first section (14a) of the active region and wherein a second temperature actuator (20b) is configured to adapt the phases of the wavelengths generated and involved in the generation of the laser radiation by setting a second temperature (T₂) within a second section (14b) of the active region, wherein the active region extends over the entire solid-state medium (14).

8. The device according to Claim 7, **characterized in that** the resonator (17.1, 17.2, 17.3, 17.4, 17.5) comprises two resonator mirrors (16a, 16b) arranged at opposite ends of the solid-state medium (14).

9. The device according to Claim 8, **characterized in that** the resonator mirrors (16a, 16b) are applied as mirror surfaces on the outside of the opposite ends of the solid-state medium (14) or
the resonator mirrors (16a, 16b) are configured separately from the solid-state medium (14), wherein at least one adjusting element (32) is provided for adjusting the distance (30a, 30b) of at least one of the resonator mirrors (16a, 16b) from the solid-state medium (14) or
a first resonator mirror (16a) is applied as a mirror surface on the outside of a first end of the solid-state medium (14) and a second resonator mirror (16b) is arranged separately from the solid-state medium (14) at a second end of the solid-state medium (14) opposite the first end, wherein an adjusting element (32) is provided for adjusting the distance of the second resonator mirror (16b) from the solid-state medium (14).

10. The device according to one of Claims 7 to 9, **characterized by** at least three temperature actuators (20a, 20b, 20c) for setting temperatures (T₁, T₂, T₃) in the active region of the solid-state medium (14), wherein the third temperature actuator (20c) is configured to set the resonator length by setting a third temperature (T₃) within a third section (14c) of the active region.

11. The device according to Claim 10, **characterized by** at least four temperature actuators for setting different temperatures (T₁, T₂, T₃, T₄) in the active region of the solid-state medium (14), wherein the fourth temperature actuator is configured to set the resonator length by setting a fourth temperature (T₄) within a fourth section (14d) of the active region.

12. The device according to one of Claims 7 to 11, **characterized by** a control unit (50) for controlling the first temperature (T₁) and/or the second temperature (T₂) to a nominal value (T₁, T₂) which depends in particular on the frequency of the pump radiation.

## Revendications

1. Procédé pour la production d'un rayonnement laser au moyen d'une structure (12) optique à température contrôlée comprenant un milieu solide (14) optiquement non linéaire disposé dans un résonateur (17.1, 17.2, 17.3, 17.4, 17.5) avec une zone active, un rayonnement de pompage introduit dans le milieu solide (14) produisant, à l'aide d'une interférence constructive, un rayonnement laser sortant, par l'adaptation de la longueur du résonateur par le réglage d'une première température (T₁) à l'intérieur d'une première section (14a) de la zone active et par l'adaptation des phases des longueurs d'onde générées et participant à la production du rayonnement laser par le réglage d'une deuxième température (T₂) à l'intérieur d'une deuxième section (14b) de la zone active, la zone active s'étendant sur la totalité du milieu solide (14).

2. Procédé selon la revendication 1, **caractérisé en ce que** le résonateur (17.1, 17.2, 17.3, 17.4, 17.5) comprend deux miroirs résonateurs (16a, 16b) disposés à des extrémités opposées du milieu solide (14).

3. Procédé selon la revendication 2, **caractérisé en ce que** les miroirs résonateurs (16a, 16b) sont montés comme surfaces réfléchissantes, à l'extérieur, sur les extrémités opposées du milieu solide (14), ou **en ce que** les miroirs résonateurs (16a, 16b) sont formés séparément du milieu solide (14), au moins un élément de réglage (32) étant prévu pour le réglage de la distance (30a, 30b) de l'au moins un des miroirs résonateurs (16a, 16b) au milieu solide (14), ou **en ce qu'**un premier miroir résonateur (16a) est monté comme surface réfléchissante, à l'extérieur, sur une première extrémité du milieu solide (14) et **en ce qu'**un deuxième miroir résonateur (16b) est disposé séparément du milieu solide (14) sur une deuxième extrémité du milieu solide (14) opposée à la première extrémité, un élément de réglage (32) étant prévu pour le réglage de la distance du deuxième miroir résonateur (16b) au milieu solide (14).

4. Procédé selon l'une des revendications précédentes, **caractérisé par** l'adaptation de la longueur de résonateur par le réglage d'une troisième température (T₃) dans une troisième section (14c) de la zone active.

5. Procédé selon la revendication 4, **caractérisé par** l'adaptation de la longueur de résonateur par le réglage d'une quatrième température (T₄) dans une quatrième section (14d) de la zone active.

6. Procédé selon l'une des revendications précédentes, **caractérisé en ce que** la première température (T₁) et/ou la deuxième température (T₂) sont réglées sur une valeur de consigne (T₁, T₂), laquelle, en particulier, est fonction de la fréquence du rayonnement de pompage.

7. Dispositif pour la production d'un rayonnement laser, comprenant une structure (12) optique à température contrôlée avec un milieu solide (14) optiquement non linéaire disposé dans un résonateur (17.1. 17.2, 17.3, 17.4, 17.5) avec une zone active, la structure (12) étant formée pour produire, à l'aide d'une interférence constructive, un rayonnement laser sortant à partir d'un rayonnement de pompage introduit dans le milieu solide (14), **caractérisé par** au moins deux actionneurs de température (20a, 20b, 20c) pour le réglage indépendant de températures (T₁, T₂, T₃) dans la zone active du milieu solide (14), le premier actionneur de température (20a) étant formé pour régler la longueur de résonateur par le réglage d'une première température (T₁) dans une première section (14a) de la zone active et un deuxième actionneur de température (20b) étant formé pour adapter les phases des longueurs d'onde générées et participant à la production du rayonnement laser par le réglage d'une deuxième température (T₂) à l'intérieur d'une deuxième section (14b) de la zone active, la zone active s'étendant sur la totalité du milieu solide (14).

8. Dispositif selon la revendication 7, **caractérisé en ce que** le résonateur (17.1, 17.2, 17.3, 17.4, 17.5) comprend deux miroirs résonateurs (16a, 16b) disposés à des extrémités opposées du milieu solide (14).

9. Dispositif selon la revendication 8, **caractérisé en ce que** les miroirs résonateurs (16a, 16b) sont montés comme surfaces réfléchissantes, à l'extérieur, sur les extrémités opposées du milieu solide (14) ou
**en ce que** les miroirs résonateurs (16a, 16b) sont formés séparément du milieu solide (14), au moins un élément de réglage (32) étant prévu pour le réglage de la distance (30a, 30b) d'au moins un des miroirs résonateurs (16a, 16b) au milieu solide (14) ou
**en ce qu'**un premier miroir résonateur (16a) est monté comme surface réfléchissante, à l'extérieur, sur une première extrémité du milieu solide (14) et **en ce qu'**un deuxième miroir résonateur (16b) est disposé séparément du milieu solide (14) sur une deuxième extrémité du milieu solide (14) opposée à la première extrémité, un élément de réglage (32) étant prévu pour le réglage de la distance du deuxième miroir résonateur (16b) au milieu solide (14).

10. Dispositif selon l'une des revendications 7 à 9, **caractérisé par** au moins trois actionneurs de température (20a, 20b, 20c) pour le réglage de températures (T₁, T₂, T₃) dans la zone active du milieu solide (14), le troisième actionneur de température (20c) étant formé pour régler la longueur de résonateur par le réglage d'une troisième température (T₃) dans une troisième section (14c) de la zone active.

11. Dispositif selon la revendication 10, **caractérisé par** au moins quatre actionneurs de température pour le réglage de températures différentes (T₁, T₂, T₃, T₄) dans la zone active du milieu solide (14), le quatrième actionneur de température étant formé pour régler la longueur de résonateur par le réglage d'une quatrième température (T₄) dans une quatrième section (14d) de la zone active.

12. Dispositif selon l'une des revendications 7 à 11, **caractérisé par** une unité de réglage (50) pour le réglage de la première température (T₁) et/ou de la deuxième température (T₂) sur une valeur de consigne (T₁, T₂), laquelle, en particulier, est fonction de la fréquence du rayonnement de pompage.
